# EUROPEAN PATENT SPECIFICATION

(11) **EP 2 678 876 B1**
(45) Date of publication and mention of the grant of the patent: **24.05.2017**
(21) Application number: 12712723.1
(22) Date of filing: 21.02.2012
(51) Int. Cl.: H01H 47/00, H02H 3/33, H01H 83/14

(54) **FAIL-SAFE GROUND FAULT CIRCUIT INTERRUPTER**
AUSFALLSICHERER FEHLERSTROMSCHUTZSCHALTER
DISJONCTEUR À COURANT DE DÉFAUT A SECURITE INTEGREE

(30) Priority: 21.02.2011 US 201113031437
(43) Date of publication of application: 01.01.2014
(73) Proprietor: Eaton Corporation, Cleveland OH 44122 (US)
(72) Inventor: ELMS, Robert, T., Monroeville, Pennsylvania 15146 (US); NATILI, Thomas, E., Butler, Pennsylvania 16002 (US)
(74) Representative: Schwan Schorer & Partner mbB
(86) International application number: PCT/IB2012/000306
(87) International publication number: WO 2012/114185

(56) References cited:
- WO-A1-00/74192
- US-A- 4 200 897
- US-A1- 2004 037 018
- US-A1- 2009 128 264
- US-A1- 2009 180 221

## Description

### BACKGROUND

### Field

The disclosed concept pertains generally to circuit interrupters and, more particularly, to ground fault circuit interrupters.

### Background Information

Ground fault circuit interrupter (GFCI) protection products have been available since about the late 1960s. This protection is regulated by UL standard UL 943 and has significantly reduced the number of yearly electrocutions.

A prior study indicated some GFCIs that had been in service for an extended time were non-functional. This study initiated investigations of changes to the UL 943 standard to require the GFCI devices to self-monitor (e.g., self-evaluate; self-test) themselves and, in one way or another, warn the consumer of a loss of protection (e.g., indicate the failure) or remove themselves from service (e.g., trip), all without interfering with the primary function of protection from electrocution.

Ground fault protection has been provided by analog circuits since its early development. Many GFCI manufacturers are moving to digital techniques (e.g., microprocessors) to provide both ground fault protection and self-monitoring functions. Microprocessors have significant features that are cause for concern. A microprocessor is initially non-functional, in terms of providing protection, until it has been powered up and initialized whenever power is first applied. Microprocessor operation is controlled by a programmed set of coded operations, which is often quite complex, and failure to properly execute these operations can cause failure to provide the required protection. UL recognized this fact and required products providing protection to satisfy the reliability and failure mode analysis requirements of UL standard UL 1998.

A NEMA "GFCI Auto-Monitoring Proposal" (Section 6.27.2) requires specific failure modes to be automatically monitored on any product that claims to meet certain requirements. In order to determine compliance with the provisions pertaining to the Auto-Monitoring Function, separate GFCIs are to be modified to represent those single component failure modes that can cause the GFCI to become unable to respond to a ground fault per this standard. Welded power contacts need not be considered. Unless as noted in 6.27.3, each sample shall be altered with a single modification that represents either an open or a shorted component (unless otherwise specified) as described in the following failure modes involving the GFCI function:
a) Alter the ground fault sensing component (current transformer).
b) Alter the integrated circuit responsible for the ground fault detection by one of the following modifications selected by the manufacturer:
   1. Disconnect the power supply pin of the IC.
   2. Disable the "clock" circuit.
   3. Open the signal path at the subject IC pin.
   4. Short the signal path pin to one of the adjacent pins one at a time.
c) Alter the current limiter (e.g. dropping resistor) of the power supply of the ground fault detection circuit.
d) Open-circuit the trip solenoid. See 6.27.7. Exception: GFCI circuit breaker types are excepted from d).
e) Open the switching semiconductor supplying the trip solenoid. See 6.27.7. Exception: GFCI circuit breaker types are excepted from e).
f) Short circuit the switching semiconductor supplying the trip solenoid.
g) Alter a single rectifier diode in the ground fault detection power supply circuit.

Section 6.27.3 provides that certain failure modes in Section 6.27.2 need not be tested if, based on an engineering analysis of the circuit, one or more of the following criterion apply. The engineering analysis must be agreeable to all parties concerned.
a) The failure mode does not interfere with the ability of the GFCI to respond to a line to ground fault.
b) The failure mode results in 5.16.4 being met automatically, without assistance from the auto-monitoring function.

Section 5.16.4 provides that the consequence of the auto-monitoring test detection of a problem shall be one or more of the following.
a) power denial (trip with the inability to reset),
b) trip with the ability to reset, subject to the next auto-monitoring test cycle or repeatedly trip, and
c) visual and / or audible indication as an alternative to a) or b) as permitted by 6.27.7.

Section 6.27.7 provides that as an alternative to meeting the requirements described in 6.27.5 - 6.27.6, failure modes in 6.27.2 that reference 6.27.7 may comply with the requirements listed below. A representative GFCI, having been subjected to a failure mode simulation, is to be correctly connected to rated line voltage and allowed to stabilize. The manually operated supervisory test function is to be performed, after which the reset button is to be operated. Each representative GFCI shall be considered as meeting the requirements of Clause 6.26 if one of the following conditions is met.
a) The GFCI visually or audibly indicates if it does not interrupt the electric circuit to all loads.
b) The GFCI interrupts the electric circuit to all loads or does not permit power to be applied to any loads, each time it is reset.
A ground fault circuit interrupter (GFCI) is also known from the document US 2009/0180221 A1. There is room for improvement in electrical switching apparatus, such as ground fault circuit interrupters.

### SUMMARY

These needs and others are met by embodiments of the disclosed concept, which provides both self-monitoring and ground fault protection with an analog circuit.

In accordance with the disclosed concept, a fail-safe ground fault circuit interrupter according to claim 1 is disclosed.

The ground fault trip circuit may further comprise a first resistor in parallel with a second resistor, the parallel combination of the last such first resistor and the last such second resistor being electrically connected between a power source and the power supply input of the analog ground fault circuit.

The ground fault trip circuit may be structured to cooperate with the operating mechanism and trip open the separable contacts responsive to the ground fault trip condition and the open circuit failure of the number of the first silicon controlled rectifier and the second silicon controlled rectifier.

The ground fault trip circuit may be structured to cooperate with the operating mechanism and trip open the separable contacts responsive to the ground fault trip condition and the closed circuit failure of the number of the first silicon controlled rectifier and the second silicon controlled rectifier.

The analog ground fault circuit may further have a voltage feedback input; and the ground fault trip circuit may be structured to cooperate with the operating mechanism and trip open the separable contacts responsive to the ground fault trip condition and an open circuit failure of the voltage feedback input.

The analog ground fault circuit may further have an operational amplifier output; the ground fault trip circuit may comprise a current transformer having a secondary winding, a first capacitor electrically connected in parallel with the secondary winding, and a second capacitor; the second capacitor may be electrically connected between the operational amplifier output and a common connection point between the first capacitor and the second capacitor; and the ground fault trip circuit may be structured to cooperate with the operating mechanism and trip open the separable contacts responsive to the ground fault trip condition and an open circuit failure of the operational amplifier output when a differential ground fault current flowing through the current transformer is greater than about 1 mA.

### BRIEF DESCRIPTION OF THE DRAWINGS

A full understanding of the disclosed concept can be gained from the following description of the preferred embodiments when read in conjunction with the accompanying drawings in which:
Figure 1 is a block diagram of a ground fault circuit interrupter in accordance with embodiments of the disclosed concept.
Figure 2 is a block diagram in schematic form of a ground fault trip circuit for the ground fault circuit interrupter of Figure 1.

### DESCRIPTION OF THE PREFERRED EMBODIMENTS

As employed herein, the term "number" shall mean one or an integer greater than one (*i.e*., a plurality).

As employed herein, the statement that two or more parts are "connected" or "coupled" together shall mean that the parts are joined together either directly or joined through one or more intermediate parts. Further, as employed herein, the statement that two or more parts are "attached" shall mean that the parts are joined together directly.

The disclosed concept is described in association with an analog ground fault integrated circuit, although the disclosed concept is applicable to a wide range of different analog ground fault circuits.

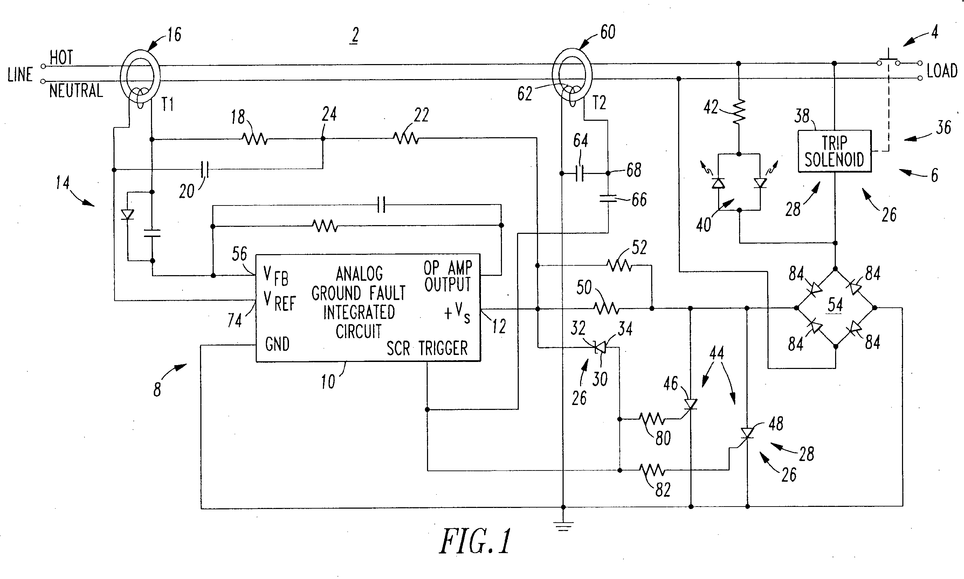

Referring to Figure 1, a fail-safe ground fault circuit interrupter (GFCI) 2 includes separable contacts 4, an operating mechanism 6 structured to open and close the separable contacts 4, and a ground fault trip circuit 8. The ground fault trip circuit 8 includes an analog ground fault circuit, such as the example analog ground fault integrated circuit 10, having a power supply input (+V_{S}) 12, and one, some or all of the following circuits 14,26,36,44.

The first circuit 14 includes a ground fault sense current transformer 16 (T1), a first resistor 18 electrically connected in series with the ground fault sense current transformer 16, a capacitor 20 electrically connected in parallel with the series combination of the first resistor 18 and the ground fault sense current transformer 16, and a second resistor 22 electrically connected between the power supply input 12 of the analog ground fault integrated circuit 10 and a common connection point 24 between the first resistor 18 and the capacitor 20.

The second circuit 26 includes a trip actuator 28 cooperating with the operating mechanism 6 and being structured to trip open the separable contacts 4, and a zener diode 30 including a cathode 32 electrically interconnected with the power supply input 12 of the analog ground fault integrated circuit 10 and an anode 34 electrically interconnected with the trip actuator 28.

The third circuit 36 includes a trip solenoid 38 cooperating with the operating mechanism 6 and being structured to trip open the separable contacts 4, a bi-directional light emitting diode 40, and a resistor 42 in series with the bi-directional light emitting diode 40, the series combination of the resistor 42 and the bi-directional light emitting diode 40 being electrically connected in parallel with the trip solenoid 38.

The fourth circuit 44 includes a first silicon controlled rectifier (SCR) 46 cooperating with the operating mechanism 6 and being structured to trip open the separable contacts 4, and a second SCR 48 cooperating with the operating mechanism 6 and being structured to trip open the separable contacts 4, the second SCR 48 being in parallel with the first SCR 46.

The ground fault trip circuit 8 is structured to cooperate with the operating mechanism 6 and trip open the separable contacts 4 responsive to a ground fault trip condition and a number of: (a) an open circuit failure of the ground fault sense current transformer 16, (b) an open circuit failure of the power supply input 12 of the analog ground fault integrated circuit 10, (c) an open circuit failure of the trip solenoid 38, and (d) an open circuit failure or a closed circuit failure of a number of the first SCR 46 and the second SCR 48.

As a non-limiting example, the example analog ground fault integrated circuit 10 is a RV4145 IC, which is a Fairchild Low Power Ground Fault Interrupter marketed by Fairchild Semiconductor Corporation of San Jose, California.

As shown, the example ground fault trip circuit 8 further includes a resistor 50 in parallel with another resistor 52, the parallel combination of these resistors 50,52 being electrically connected between a GFCI power supply 54 and the power supply input 12 of the analog ground fault integrated circuit 10. If one of the resistors 50,52 fails, then there will be sufficient current to the power supply input 12.

The example analog ground fault integrated circuit 10 further has a voltage feedback input (V_{FB}) 56, and is structured to cooperate with the operating mechanism 6 and trip open the separable contacts 4 responsive to the ground fault trip condition and an open circuit failure of the voltage feedback input 56.

The example analog ground fault integrated circuit 10 further has an operational amplifier output 58 (Op Amp Output). The example ground fault trip circuit 8 further includes a current transformer 60 having a secondary winding 62, a first capacitor 64 electrically connected in parallel with the secondary winding 62, and a second capacitor 66. The second capacitor 66 is electrically connected between the operational amplifier output 58 and a common connection point 68 between the capacitors 64,66. The ground fault trip circuit 8 is structured to cooperate with the operating mechanism 6 and trip open the separable contacts 4 responsive to the ground fault trip condition and an open circuit failure of the operational amplifier output 58 when a differential ground fault current flowing through the current transformer 60 is greater than about 1 mA. The signals from the current transformers 16,60 are coupled to the voltage feedback (V_{FB}) input 56. The gain of the corresponding amplifier is set by a feedback resistor which sets the trip level.

The ground fault trip circuit 8 is structured to cooperate with the operating mechanism 6 and trip open the separable contacts 4 responsive to the ground fault trip condition and an open circuit failure or a closed circuit failure of one or both of the first SCR 46 and the second SCR 48.

An open circuit of the ground fault sense current transformer 16 (T1) is sensed by the two resistors 18,22 (e.g., without limitation, 510 kΩ; any suitable value), the capacitor 20 (e.g., without limitation, 0.1 uF; any suitable value), and the diode 70 across capacitor 72. This is a safe failure mode. During normal operation, current from the two resistors 18,22 is diverted through the current transformer 16 (T1) winding to the ground fault integrated circuit 10 reference (V_{REF}) input 74, and none of the current of the first resistor 18 flows into the ground fault integrated circuit 10 input (V_{FB}) input 56. However, if the current transformer 16 (T1) winding opens, the current of the first resistor 18 flows through the diode 70 into the ground fault integrated circuit 10 input (V_{FB}) input 56, is amplified and is detected as a trip condition, thereby causing instantaneous tripping of the GFCI 2.

Disconnection of the power supply input 12 of the analog ground fault integrated circuit 10 is detected and produces an instantaneous trip by the zener diode 30 (e.g., without limitation, 30 V; any suitable value) if the IC power supply input 12 fails open (e.g., a typical failure mode). If the IC power supply input 12 is open circuited, then the voltage at that node increases until the zener diode 30 conducts the power supply current from the parallel resistors 50,52 and shunts that current to the gates of the two SCRs 46,48 to cause an instantaneous trip. This is a safe failure mode.

An open circuit of the input signal path at the ground fault integrated circuit 10 input (V_{FB}) input 56 is equivalent to disconnection of the IC power supply input 12 and produces an instantaneous trip. An open circuit of the output signal path of the operational amplifier output 58 will cause instantaneous tripping when there is any ground fault current above about 1 mA. This is a safe failure mode. An open circuit at either input 56 or output 58 will cause open loop gain, thereby increasing the sensitivity.

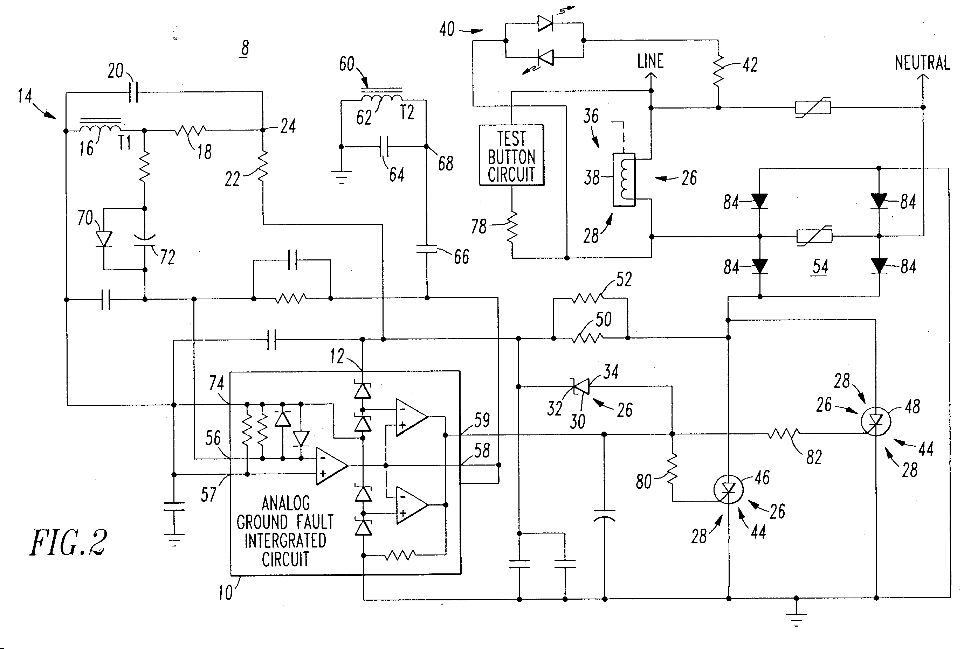

Shorting the power supply input 12 pin to one of the adjacent (not shown as being adjacent in Figure 2 for ease of illustration) pins (Op Amp Output 58 or SCR Trigger 59) of IC 10 one at a time causes an instant trip. Similarly, shorting the voltage feedback input 56 pin to its adjacent pin (+Input 57) of IC 10 causes an instant trip.

Circuit breakers are excepted from an open circuit failure of a trip solenoid, such as 38. If the trip solenoid 38 winding fails open, then there is no mechanism to trip the GFCI 2. However, when the trip solenoid 38 is open-circuited, the disclosed circuit 36 indicates failure by lighting the bi-directional LEDs 40 by current from the resistor 78 across the trip solenoid 38. The trip solenoid 38 normally is a short circuit to the current drawn by the two power supply resistors 50,52. Under this condition, the LEDs 40 indicate the open winding condition. Normally, the voltage across the trip solenoid 38 under a no trip condition is about 1/1000 of the line voltage (the example power supply resistors 50,52 are, for example and without limitation, about 39 kΩ and the trip solenoid 38 resistance is, for example and without limitation, about 24 Ω) or about 0.12 VAC. This voltage is too low to cause the LEDs 40 to conduct current and emit light. However, if the trip solenoid 38 winding is open, then all of the power supply current (e.g., without limitation, about 5 mA) tries to flow through the LEDs 40 since this is the alternate path when the trip solenoid 38 winding is open. That power supply current causes the LEDs 40 to be illuminated, thereby indicating failure of the GFCI 2.

Protection from an open circuit condition of an SCR is provided by the use of first SCR 46 and parallel second SCR 48. The use of the second SCR 48 in substantial parallel relationship to the first SCR 46 provides tripping whenever either one of the two SCRs 46,48 is open circuited. The GFCI 2 functions normally with this failure mode.

Shorting either of the two SCRs 46,48 causes instantaneous tripping of the GFCI 2. This is a safe failure mode.

Redundancy is provided for the trip SCRs 46,48, and the power supply dropping resistors 50,52. If a single failure of either of the SCRs 46,48 or the resistors 50,52 occurs, then the GFCI 2 is still 100% functional. Also, gate resistors 80,82 (e.g., without limitation, 1 kΩ; any suitable value) are provided in order that SCR operation is independent of the functional state of the other SCR. A shorted SCR is a fail-safe condition since the GFCI 2 will instantaneously trip whenever it is closed.

The analog IC 10 does not have a clock and, hence, the corresponding test is not applicable.

The failure mode of the power supply resistor 50 or 52 is open circuit failure. Protection is maintained by providing redundancy of this power supply dropping resistor function. Two resistors 50,52 (e.g., without limitation, 39 KΩ; any suitable value) are used in parallel. If one resistor 50,52 fails open, then the other resistor 52,50 continues to provide power supply current. The GFCI 2 functions normally with this failure mode.

The disclosed concept includes the well accepted use of redundancy to eliminate loss of protection due to a single fault failure.

Altering a single rectifier diode 84 in the GFCI power supply 54 with a short circuit causes instantaneous tripping. This is a safe failure mode. An open circuit of one of the power supply rectifier diodes 84 results in normal operation. The GFCI 2 functions normally with this failure mode.

The various GFCI failures disclosed herein have been determined by NEMA to be major failure mechanisms in GFCI products. In all but one case disclosed herein, failure results in a fail-safe trip condition. In the other case when the trip solenoid 38 winding fails open, the bi-directional LEDs 40 indicate or alert the user to the open winding condition.

Although an example analog ground fault integrated circuit 10 is shown, it will be appreciated that a wide range of other analog ground fault circuits can be employed. Other non-limiting examples are disclosed in U.S. Patent Application Publication Nos. 2009/0086387, and 2006/0018059.

While specific embodiments of the disclosed concept have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed concept which is to be given the full breadth of the claims appended.

### REFERENCE NUMERICAL LIST

- 2: fail-safe ground fault circuit interrupter (GFCI)
- 4: separable contacts
- 6: operating mechanism
- 8: ground fault trip circuit
- 10: analog ground fault integrated circuit
- 12: power supply input (+V_{S})
- 14: first circuit
- 16: ground fault sense current transformer (T1)
- 18: first resistor
- 20: capacitor
- 22: second resistor
- 24: common connection point
- 26: second circuit
- 28: trip actuator
- 30: zener diode
- 32: cathode
- 34: anode
- 36: third circuit
- 38: trip solenoid
- 40: bi-directional light emitting diode
- 42: resistor
- 44: fourth circuit
- 46: first silicon controlled rectifier (SCR)
- 48: second SCR
- 50: resistor
- 52: resistor
- 54: GFCI power supply
- 56: voltage feedback (V_{FB}) input
- 57: +Input
- 58: operational amplifier output (Op Amp Output)
- 59: SCR Trigger
- 60: current transformer
- 62: secondary winding
- 64: first capacitor
- 66: second capacitor
- 68: common connection point
- 70: diode
- 72: capacitor
- 74: reference (V_{REF}) input
- 78: resistor
- 80: gate resistor
- 82: gate resistor
- 84: rectifier diodes

## Claims

1. A fail-safe ground fault circuit interrupter (2) comprising:
separable contacts (4);
an operating mechanism (6) structured to open and close said separable contacts; and
a ground fault trip circuit (8) comprising an analog ground fault circuit (10) having a power supply input (12), and at least one of:
(a) a ground fault sense current transformer (16),
a first resistor (18) electrically connected in series with said ground fault sense current transformer,
a capacitor (20) electrically connected in parallel with the series combination of said first resistor and said ground fault sense current transformer, and
a second resistor (22) electrically connected between the power supply input of said analog ground fault circuit and a common connection point (24) between said first resistor and said capacitor,
(b) a trip actuator (28) cooperating with said operating mechanism and being structured to trip open said separable contacts, and
a zener diode (30) including a cathode (32) electrically interconnected with the power supply input of said analog ground fault circuit and an anode (34) electrically interconnected with said trip actuator,
(c) a trip solenoid (38) cooperating with said operating mechanism and being structured to trip open said separable contacts,
a bi-directional light emitting diode (40), and
a resistor (42) in series with said bi-directional light emitting diode, the series combination of said resistor and said bi-directional light emitting diode being electrically connected in parallel with said trip solenoid, and
(d) a first silicon controlled rectifier (46) cooperating with said operating mechanism and being structured to trip open said separable contacts, and a second silicon controlled rectifier (48) cooperating with said operating mechanism and being structured to trip open said separable contacts, said second silicon controlled rectifier being in parallel with said first silicon controlled rectifier,
**characterized in that** said ground fault trip circuit is structured to cooperate with said operating mechanism and trip open said separable contacts responsive to a ground fault trip condition and at least one of:
(a) an open circuit failure of said ground fault sense current transformer,
(b) an open circuit failure of the power supply input of said analog ground fault circuit,
(c) an open circuit failure of the trip solenoid, and
(d) an open circuit failure of at least one of said first silicon controlled rectifier and said second silicon controlled rectifier.

2. The fail-safe ground fault circuit interrupter (2) of Claim 1 wherein said ground fault trip circuit (8) further comprises a plurality of:
(a) said ground fault sense current transformer (16),
said first resistor (18) electrically connected in series with said ground fault sense current transformer,
said capacitor (20) electrically connected in parallel with the series combination of said first resistor and said ground fault sense current transformer, and
said second resistor (22) electrically connected between the power supply input of said analog ground fault circuit and the common connection point (24) between said first resistor and said capacitor,
(b) said trip actuator (28) cooperating with said operating mechanism and being structured to trip open said separable contacts, and
said zener diode (30) including the cathode (32) electrically interconnected with the power supply input of said analog ground fault circuit and the anode (34) electrically interconnected with said trip actuator,
(c) said trip solenoid (38) cooperating with said operating mechanism and being structured to trip open said separable contacts,
said bi-directional light emitting diode (40), and
said resistor (42) in series with said bi-directional light emitting diode, the series combination of said resistor and said bi-directional light emitting diode being electrically connected in parallel with said trip solenoid, and
(d) said first silicon controlled rectifier (46) cooperating with said operating mechanism and being structured to trip open said separable contacts, and
said second silicon controlled rectifier (48) cooperating with said operating mechanism and being structured to trip open said separable contacts, said second silicon controlled rectifier being in parallel with said first silicon controlled rectifier, and
wherein said ground fault trip circuit is structured to cooperate with said operating mechanism and trip open said separable contacts responsive to the ground fault trip condition and a plurality of:
(a) said open circuit failure of said ground fault sense current transformer.
(b) said open circuit failure of the power supply input of said analog ground fault circuit,
(c) said open circuit failure of the trip solenoid, and
(d) said open circuit failure of the number of said first silicon controlled rectifier and said second silicon controlled rectifier.

3. The fail-safe ground fault circuit interrupter (2) of Claims 1 or 2 wherein said ground fault trip circuit further comprises a first resistor (50) in parallel with a second resistor (52), the parallel combination of the last said first resistor and the last said second resistor being electrically connected between a power source (54) and the power supply input of said analog ground fault circuit.

4. The fail-safe ground fault circuit interrupter (2) of Claims 1 or 2 wherein said ground fault trip circuit comprises:
(a) said ground fault sense current transformer,
said first resistor electrically connected in series with said ground fault sense current transformer,
said capacitor electrically connected in parallel with the series combination of said first resistor and said ground fault sense current transformer, and
said second resistor electrically connected between the power supply input of said analog ground fault circuit and the common connection point between said first resistor and said capacitor, and
wherein said ground fault trip circuit is structured to cooperate with said operating mechanism and trip open said separable contacts responsive to the ground fault trip condition and said open circuit failure of said ground fault sense current transformer.

5. The fail-safe ground fault circuit interrupter (2) of Claims 1 or 2 wherein said ground fault trip circuit comprises:
(b) said trip actuator cooperating with said operating mechanism and being structured to trip open said separable contacts, and
said zener diode including the cathode electrically interconnected with the power supply input of said analog ground fault circuit and the anode electrically interconnected with said trip actuator, and
wherein said ground fault trip circuit is structured to cooperate with said operating mechanism and trip open said separable contacts responsive to the ground fault trip condition and said open circuit failure of the power supply input of said analog ground fault circuit.

6. The fail-safe ground fault circuit interrupter (2) of Claims 1 or 2 wherein said ground fault trip circuit comprises:
(c) said trip solenoid cooperating with said operating mechanism and being structured to trip open said separable contacts,
said bi-directional light emitting diode, and
said resistor in series with said bi-directional light emitting diode, the series combination of said resistor and said bi-directional light emitting diode being electrically connected in parallel with said trip solenoid, and
wherein said ground fault trip circuit is structured to cooperate with said operating mechanism and trip open said separable contacts responsive to the ground fault trip condition and said open circuit failure of the trip solenoid.

7. The fail-safe ground fault circuit interrupter (2) of Claims 1 or 2 wherein said ground fault trip circuit comprises:
(d) said first silicon controlled rectifier cooperating with said operating mechanism and being structured to trip open said separable contacts, and
said second silicon controlled rectifier cooperating with said operating mechanism and being structured to trip open said separable contacts, said second silicon controlled rectifier being in parallel with said first silicon controlled rectifier, and
wherein said ground fault trip circuit is structured to cooperate with said operating mechanism and trip open said separable contacts responsive to the ground fault trip condition and said open circuit failure of said number of said first silicon controlled rectifier and said second silicon controlled rectifier.

8. The fail-safe ground fault circuit interrupter (2) of Claim 7 wherein said ground fault trip circuit is structured to cooperate with said operating mechanism and trip open said separable contacts responsive to the ground fault trip condition and said open circuit failure of said number of said first silicon controlled rectifier and said second silicon controlled rectifier.

9. The fail-safe ground fault circuit interrupter (2) of Claims 1 or 2 wherein said analog ground fault circuit further has a voltage feedback input (56); and wherein said ground fault trip circuit is structured to cooperate with said operating mechanism and trip open said separable contacts responsive to the ground fault trip condition and an open circuit failure of said voltage feedback input.

10. The fail-safe ground fault circuit interrupter (2) of Claims 1 or 2 wherein said analog ground fault circuit further has an operational amplifier output (58); wherein said ground fault trip circuit comprises a current transformer (60) having a secondary winding (62), a first capacitor (64) electrically connected in parallel with the secondary winding, and a second capacitor (66); wherein the second capacitor is electrically connected between said operational amplifier output and a common connection point (68) between said first capacitor and said second capacitor; and wherein said ground fault trip circuit is structured to cooperate with said operating mechanism and trip open said separable contacts responsive to the ground fault trip condition and an open circuit failure of said operational amplifier output when a differential ground fault current flowing through said current transformer is greater than about 1 mA.

## Patentansprüche

1. Ausfallsicherer Fehlerstromschutzschalter (2), versehen mit:
trennbaren Kontakten (4);
einem Betätigungsmechanismus (6), der ausgelegt ist, die trennbaren Kontakte zu öffnen und zu schließen; und
einem Fehlerstromauslösekreis (8) mit einem analogen Fehlerstromkreis (10) mit einem Stromversorgungseingang (12) und einem oder mehreren von:
(a) einem Fehlerstrom-Messstromwandler (16),
einem ersten Widerstand (18), der elektrisch in Reihe mit dem Fehlerstrom-Messstromwandler (16) angeschlossen ist,
einem Kondensator (20), der parallel zu der Reihenschaltung des ersten Widerstands und des Fehlerstrom-Messstromwandlers elektrisch angeschlossen ist, und
einem zweiten Widerstand (22), der zwischen dem Stromversorgungseingang des analogen Fehlerstromkreises und einer gemeinsamen Anschlussstelle (24) zwischen dem ersten Widerstand und dem Kondensator elektrisch angeschlossen ist,
(b) einem Auslöseaktuator (28), der mit dem Betätigungsmechanismus zusammenwirkt und ausgelegt ist, ein Öffnen der trennbaren Kontakte auszulösen, und
einer Zenerdiode (30), die eine Katode (32), die elektrisch mit dem Stromversorgungseingang des analogen Fehlerstromkreises verschaltet ist, und eine Anode (34), die elektrisch mit dem Auslöseaktuator verschaltet ist, aufweist,
(c) einem Auslöse-Elektromagneten (38), der mit dem Betätigungsmechanismus zusammenwirkt und ausgelegt ist, ein Öffnen der trennbaren Kontakte auszulösen,
einer bidirektionalen lichtemittierenden Diode (40), und
einem Widerstand (42) in Reihe mit der bidirektionalen lichtemittierenden Diode, wobei die Reihenschaltung des Widerstands und der bidirektionalen lichtemittierenden Diode elektrisch parallel zu dem Auslöse-Elektromagneten angeschlossen ist, und
(d) einem ersten Thyristor (46), der mit dem Betätigungsmechanismus zusammenwirkt und ausgelegt ist, ein Öffnen der trennbaren Kontakte auszulösen, und
einem zweiten Thyristor (48), der mit dem Betätigungsmechanismus zusammenwirkt und ausgelegt ist, ein Öffnen der trennbaren Kontakte auszulösen, wobei der zweite Thyristor parallel zu dem ersten Thyristor angeschlossen ist,
**dadurch gekennzeichnet, dass** der Fehlerstromauslösekreis ausgelegt ist, mit dem Betätigungsmechanismus zusammenzuwirken und die trennbaren Kontakte in Ansprechen auf einen Fehlerstromauslösezustand sowie einen oder mehrere der nachstehenden Zustände auszulösen:
(a) einen Fehler eines offenen Kreises des Fehlerstrom-Messstromwandlers,
(b) einen Fehler eines offenen Kreises des Stromversorgungseingangs des analogen Fehlerstromkreises,
(c) einen Fehler eines offenen Kreises des Auslöse-Elektromagneten, und
(d) einen Fehler eines offenen Kreises von einem oder beiden des ersten Thyristors und des zweiten Thyristors.

2. Ausfallsicherer Fehlerstromschutzschalter (2) gemäß Anspruch 1, wobei der Fehlerstromauslösekreis (8) ferner versehen ist mit einer Mehrzahl aus:
(a) dem Fehlerstrom-Messstromwandler (16),
dem ersten Widerstand (18), der elektrisch in Reihe mit dem Fehlerstrom-Messstromwandler angeschlossen ist,
dem Kondensator (20), der parallel zu der Reihenschaltung des ersten Widerstands und des Fehlerstrom-Messstromwandlers angeschlossen ist, und
dem zweiten Widerstand (22), der elektrisch zwischen dem Stromversorgungseingang des analogen Fehlerstromkreises und der gemeinsamen Anschlussstelle (24) zwischen dem ersten Widerstand und dem Kondensator angeschlossen ist,
(b) dem Auslöseaktuator (28), der mit dem Betätigungsmechanismus zusammenwirkt und ausgelegt ist, ein Öffnen der trennbaren Kontakte auszulösen, und
der Zenerdiode (30), welche die Katode (32), die elektrisch mit dem Stromversorgungseingang des analogen Fehlerstromkreises verschaltet ist, und die Anode (34), die elektrisch mit dem Auslöseaktuator verschaltet ist, aufweist,
(c) dem Auslöse-Elektromagneten (38), der mit dem Betätigungsmechanismus zusammenwirkt und ausgelegt ist, ein Öffnen der trennbaren Kontakte auszulösen,
der bidirektionalen lichtemittierenden Diode (40), und
dem Widerstand (42) in Reihe mit der bidirektionalen lichtemittierenden Diode, wobei die Reihenschaltung des Widerstands und der bidirektionalen lichtemittierenden Diode elektrisch parallel zu dem Auslöse-Elektromagneten angeschlossen ist, und
(d) dem ersten Thyristor (46), der mit dem Betätigungsmechanismus zusammenwirkt und ausgelegt ist, ein Öffnen der trennbaren Kontakte auszulösen, und
dem zweiten Thyristor (48), der mit dem Betätigungsmechanismus zusammenwirkt und ausgelegt ist, ein Öffnen der trennbaren Kontakte auszulösen, wobei der zweite Thyristor parallel zu dem ersten Thyristor angeschlossen ist, und
wobei der Fehlerstromauslösekreis ausgelegt ist, mit dem Betätigungsmechanismus zusammenzuwirken und die trennbaren Kontakte in Ansprechen auf einen Fehlerstromauslösezustand sowie eine Mehrzahl der nachstehenden Zustände auszulösen:
(a) den Fehler eines offenen Kreises des Fehlerstrom-Messstromwandlers,
(b) den Fehler eines offenen Kreises des Stromversorgungseingangs des analogen Fehlerstromkreises,
(c) den Fehler eines offenen Kreises des Auslöse-Elektromagneten, und
(d) den Fehler eines offenen Kreises von einem oder beiden des ersten Thyristors und des zweiten Thyristors.

3. Ausfallsicherer Fehlerstromschutzschalter (2) gemäß Anspruch 1 oder 2, wobei der Fehlerstromauslösekreis (8) ferner versehen ist mit einem ersten Widerstand (50) parallel zu dem zweiten Widerstand (52), wobei die Parallelschaltung des letzten ersten Widerstands und des letzten zweiten Widerstand elektrisch zwischen einer Stromquelle (54) und dem Stromversorgungseingang des analogen Fehlerstromkreises angeschlossen ist.

4. Ausfallsicherer Fehlerstromschutzschalter (2) gemäß Anspruch 1 oder 2, wobei der Fehlerstromauslösekreis versehen ist mit:
(a) dem Fehlerstrom-Messstromwandler,
dem ersten Widerstand, der elektrisch in Reihe mit dem Fehlerstrom-Messstromwandler angeschlossen ist,
dem Kondensator, der elektrisch parallel zu der Reihenschaltung des ersten Widerstands und des Fehlerstrom-Messstromwandlers angeschlossen ist, und
dem zweiten Widerstand, der elektrisch zwischen dem Stromversorgungseingang des analogen Fehlerstromkreises und der gemeinsamen Anschlussstelle zwischen dem ersten Widerstand und dem Kondensator angeschlossen ist, und
wobei der Fehlerstromauslösekreis ausgelegt ist, mit dem Betätigungsmechanismus zusammenzuwirken und die trennbaren Kontakte in Ansprechen auf den Fehlerstromauslösezustand sowie den Fehler eines offenen Kreises des Fehlerstrom-Messstromwandlers auszulösen.

5. Ausfallsicherer Fehlerstromschutzschalter (2) gemäß Anspruch 1 oder 2, wobei der Fehlerstromauslösekreis versehen ist mit:
(b) dem Auslöseaktuator, der mit dem Betätigungsmechanismus zusammenwirkt und ausgelegt ist, ein Öffnen der trennbaren Kontakte auszulösen,
und
der Zenerdiode, welche die Katode, die elektrisch mit dem Stromversorgungseingang des analogen Fehlerstromkreises verschaltet ist, und die Anode, die elektrisch mit dem Auslöseaktuator verschaltet ist, aufweist, und
wobei der Fehlerstromauslösekreis ausgelegt ist, mit dem Betätigungsmechanismus zusammenzuwirken und ein Öffnen der trennbaren Kontakte in Ansprechen auf den Fehlerstromauslösezustand sowie den Fehler eines offenen Kreises des Stromversorgungseingangs des analogen Fehlerstromkreises auszulösen.

6. Ausfallsicherer Fehlerstromschutzschalter (2) gemäß Anspruch 1 oder 2, wobei der Fehlerstromauslösekreis versehen ist mit:
(c) dem Auslöse-Elektromagneten, der mit dem Betätigungsmechanismus zusammenwirkt und ausgelegt ist, ein Öffnen der trennbaren Kontakte auszulösen,
der bidirektionalen lichtemittierenden Diode, und
dem Widerstand in Reihe mit der bidirektionalen lichtemittierenden Diode, wobei die Reihenschaltung des Widerstands und der bidirektionalen lichtemittierenden Diode elektrisch parallel zu dem Auslöse-Elektromagneten angeschlossen ist, und
wobei der Fehlerstromauslösekreis ausgelegt ist, mit dem Betätigungsmechanismus zusammenzuwirken und ein Öffnen der trennbaren Kontakte in Ansprechen auf den Fehlerstromauslösezustand sowie den Fehler eines offenen Kreises des Auslöse-Elektromagneten auszulösen.

7. Ausfallsicherer Fehlerstromschutzschalter (2) gemäß Anspruch 1 oder 2, wobei der Fehlerstromauslösekreis versehen ist mit:
(d) dem ersten Thyristor, der mit dem Betätigungsmechanismus zusammenwirkt und ausgelegt ist, ein Öffnen der trennbaren Kontakte auszulösen,
und
dem zweiten Thyristor, der mit dem Betätigungsmechanismus zusammenwirkt und ausgelegt ist, ein Öffnen der trennbaren Kontakte auszulösen, wobei der zweite Thyristor parallel zu dem ersten Thyristor angeschlossen ist, und
wobei der Fehlerstromauslösekreis ausgelegt ist, mit dem Betätigungsmechanismus zusammenzuwirken und ein Öffnen der trennbaren Kontakte in Ansprechen auf den Fehlerstromauslösezustand sowie den Fehler eines offenen Kreises von einem oder beiden des ersten Thyristors und des zweiten Thyristors auszulösen.

8. Ausfallsicherer Fehlerstromschutzschalter (2) gemäß Anspruch 7, wobei der Fehlerstromauslösekreis ausgelegt ist, mit dem Betätigungsmechanismus zusammenzuwirken und ein Öffnen der trennbaren Kontakte in Ansprechen auf den Fehlerstromauslösezustand sowie den Fehler eines offenen Kreises von einem oder beiden des ersten Thyristors und des zweiten Thyristors auszulösen.

9. Ausfallsicherer Fehlerstromschutzschalter (2) gemäß Anspruch 1 oder 2, wobei der analoge Fehlerstromkreis ferner einen Spannungsrückkopplungseingang (56) aufweist, und wobei der Fehlerstromauslösekreis ausgelegt ist, mit dem Betätigungsmechanismus zusammenzuwirken und ein Öffnen der trennbaren Kontakte in Ansprechen auf den Fehlerstromauslösezustand sowie einen Fehler eines offenen Kreises des Spannungsrückkopplungseingangs auszulösen.

10. Ausfallsicherer Fehlerstromschutzschalter (2) gemäß Anspruch 1 oder 2, wobei der analoge Fehlerstromkreis ferner einen Operationsverstärkerausgang (58) aufweist; wobei der Fehlerstromauslösekreis einen Stromwandler (60) mit einer Sekundärvvindung (62) aufweist, wobei ein erster Kondensator (64) elektrisch parallel zu der Sekundärwindung angeschlossen ist, sowie einem zweiten Kondensator (66); wobei der zweite Kondensator elektrisch zwischen dem Operationsverstärkerausgang und einer gemeinsamen Anschlussstelle (68) zwischen dem ersten Kondensator und dem zweiten Kondensator angeschlossen ist; und wobei der Fehlerstromauslösekreis ausgelegt ist, mit dem Betätigungsmechanismus zusammenzuwirken und ein Öffnen der trennbaren Kontakte in Ansprechen auf den Fehlerstromauslösezustand sowie einen Fehler eines offenen Kreises des Operationsverstärkerausgangs auszulösen, wenn ein den Stromwandler durchfließender differentieller Fehlerstrom einen Wert von größer als etwa 1 mA hat.

## Revendications

1. Disjoncteur à courant de défaut à sécurité intégrée (2) comprenant :
des contacts séparables (4) ;
un mécanisme d'actionnement (6) structuré de façon à ouvrir et fermer lesdits contacts séparables ; et
un circuit de déclenchement de défaut de mise à la terre (8) comprenant un circuit de défaut de mise à la terre analogique (10) ayant une entrée d'alimentation électrique (12), et au moins un élément parmi :
(a) un transformateur de courant de détection de défaut de mise à la terre (16),
une première résistance (18) connectée électriquement en série avec ledit transformateur de courant de détection de défaut de mise à la terre,
un condensateur (20) connecté électriquement en parallèle avec la combinaison en série de ladite première résistance et dudit transformateur de courant de détection de défaut de mise à la terre, et
une seconde résistance (22) connectée électriquement entre l'entrée d'alimentation électrique dudit circuit de défaut de mise à la terre analogique et un point de connexion commun (24) entre ladite première résistance et ledit condensateur,
(b) un déclencheur (28) coopérant avec ledit mécanisme d'actionnement et étant structuré de façon à déclencher l'ouverture desdits contacts séparables, et
une diode Zener (30) comprenant une cathode (32) interconnectée électriquement avec l'entrée d'alimentation électrique dudit circuit de défaut de mise à la terre analogique et une anode (34) interconnectée électriquement avec ledit déclencheur,
(c) un solénoïde de déclenchement (38) coopérant avec ledit mécanisme d'actionnement et étant structuré de façon à déclencher l'ouverture desdits contacts séparables,
une diode électroluminescente bidirectionnelle (40), et
une résistance (42) en série avec ladite diode électroluminescente bidirectionnelle, la combinaison en série de ladite résistance et de ladite diode électroluminescente bidirectionnelle étant connectée électriquement en parallèle avec ledit solénoïde de déclenchement, et
(d) un premier redresseur commandé au silicium (46) coopérant avec ledit mécanisme d'actionnement et étant structuré de façon à déclencher l'ouverture desdits contacts séparables, et
un second redresseur commandé au silicium (48) coopérant avec ledit mécanisme d'actionnement et étant structuré de façon à déclencher l'ouverture desdits contacts séparables, ledit second redresseur commandé au silicium étant monté en parallèle avec ledit premier redresseur commandé au silicium,
**caractérisé en ce que** ledit circuit de déclenchement de défaut de mise à la terre est structuré de façon à coopérer avec ledit mécanisme d'actionnement et à déclencher l'ouverture desdits contacts séparables en réponse à une condition de déclenchement de défaut de mise à la terre et à au moins un élément parmi :
(a) une défaillance en circuit ouvert dudit transformateur de courant de détection de défaut de mise à la terre,
(b) une défaillance en circuit ouvert de l'entrée d'alimentation électrique dudit circuit de défaut de mise à la terre analogique,
(c) une défaillance en circuit ouvert du solénoïde de déclenchement, et
(d) une défaillance en circuit ouvert d'au moins un parmi ledit premier redresseur commandé au silicium et ledit second redresseur commandé au silicium.

2. Disjoncteur à courant de défaut à sécurité intégrée (2) selon la revendication 1, dans lequel ledit circuit de déclenchement de défaut de mise à la terre (8) comprend en outre une pluralité d'éléments parmi :
(a) ledit transformateur de courant de détection de défaut de mise à la terre (16),
ladite première résistance (18) connectée électriquement en série avec ledit transformateur de courant de détection de défaut de mise à la terre,
ledit condensateur (20) connecté électriquement en parallèle avec la combinaison en série de ladite première résistance et dudit transformateur de courant de détection de défaut de mise à la terre, et
ladite seconde résistance (22) connectée électriquement entre l'entrée d'alimentation électrique dudit circuit de défaut de mise à la terre analogique et le point de connexion commun (24) entre ladite première résistance et ledit condensateur,
(b) ledit déclencheur (28) coopérant avec ledit mécanisme d'actionnement et étant structuré de façon à déclencher l'ouverture desdits contacts séparables, et
ladite diode Zener (30) comprenant la cathode (32) interconnectée électriquement avec l'entrée d'alimentation électrique dudit circuit de défaut de mise à la terre analogique et l'anode (34) interconnectée électriquement avec ledit déclencheur,
(c) ledit solénoïde de déclenchement (38) coopérant avec ledit mécanisme d'actionnement et étant structuré de façon à déclencher l'ouverture desdits contacts séparables,
ladite diode électroluminescente bidirectionnelle (40), et
ladite résistance (42) en série avec ladite diode électroluminescente bidirectionnelle, la combinaison en série de ladite résistance et de ladite diode électroluminescente bidirectionnelle étant connectée électriquement en parallèle avec ledit solénoïde de déclenchement, et
(d) ledit premier redresseur commandé au silicium (46) coopérant avec ledit mécanisme d'actionnement et étant structuré de façon à déclencher l'ouverture desdits contacts séparables, et
ledit second redresseur commandé au silicium (48) coopérant avec ledit mécanisme d'actionnement et étant structuré de façon à déclencher l'ouverture desdits contacts séparables, ledit second redresseur commandé au silicium étant monté en parallèle avec ledit premier redresseur commandé au silicium, et
dans lequel ledit circuit de déclenchement de défaut de mise à la terre est structuré de façon à coopérer avec ledit mécanisme d'actionnement et à déclencher l'ouverture desdits contacts séparables en réponse à la condition de déclenchement de défaut de mise à la terre et à une pluralité d'éléments parmi :
(a) ladite défaillance en circuit ouvert dudit transformateur de courant de détection de défaut de mise à la terre,
(b) ladite défaillance en circuit ouvert de l'entrée d'alimentation électrique dudit circuit de défaut de mise à la terre analogique,
(c) ladite défaillance en circuit ouvert du solénoïde de déclenchement, et
(d) ladite défaillance en circuit ouvert du nombre dudit premier redresseur commandé au silicium et dudit second redresseur commandé au silicium.

3. Disjoncteur à courant de défaut à sécurité intégrée (2) selon les revendications 1 ou 2, dans lequel ledit circuit de déclenchement de défaut de mise à la terre comprend en outre une première résistance (50) montée en parallèle avec une seconde résistance (52), la combinaison en parallèle de cette dite première résistance et de cette dite seconde résistance étant connectée électriquement entre une source de courant (54) et l'entrée d'alimentation électrique dudit circuit de défaut de mise à la terre analogique.

4. Disjoncteur à courant de défaut à sécurité intégrée (2) selon les revendications 1 ou 2, dans lequel ledit circuit de déclenchement de défaut de mise à la terre comprend :
(a) ledit transformateur de courant de détection de défaut de mise à la terre,
ladite première résistance connectée électriquement en série avec ledit transformateur de courant de détection de défaut de mise à la terre,
ledit condensateur connecté électriquement en parallèle avec la combinaison en série de ladite première résistance et dudit transformateur de courant de détection de défaut de mise à la terre, et
ladite seconde résistance connectée électriquement entre l'entrée d'alimentation électrique dudit circuit de défaut de mise à la terre analogique et le point de connexion commun entre ladite première résistance et ledit condensateur, et
dans lequel ledit circuit de déclenchement de défaut de mise à la terre est structuré de façon à coopérer avec ledit mécanisme d'actionnement et à déclencher l'ouverture desdits contacts séparables en réponse à la condition de déclenchement de défaut de mise à la terre et à ladite défaillance en circuit ouvert dudit transformateur de courant de détection de défaut de mise à la terre.

5. Disjoncteur à courant de défaut à sécurité intégrée (2) selon les revendications 1 ou 2, dans lequel ledit circuit de déclenchement de défaut de mise à la terre comprend :
(b) ledit déclencheur coopérant avec ledit mécanisme d'actionnement et étant structuré de façon à déclencher l'ouverture desdits contacts séparables, et
ladite diode Zener comprenant la cathode interconnectée électriquement avec l'entrée d'alimentation électrique dudit circuit de défaut de mise à la terre analogique et l'anode interconnectée électriquement avec ledit déclencheur, et
dans lequel ledit circuit de déclenchement de défaut de mise à la terre est structuré de façon à coopérer avec ledit mécanisme d'actionnement et à déclencher l'ouverture desdits contacts séparables en réponse à la condition de déclenchement de défaut de mise à la terre et à ladite défaillance en circuit ouvert de l'entrée d'alimentation électrique dudit circuit de défaut de mise à la terre analogique.

6. Disjoncteur à courant de défaut à sécurité intégrée (2) selon les revendications 1 ou 2, dans lequel ledit circuit de déclenchement de défaut de mise à la terre comprend :
(c) ledit solénoïde de déclenchement coopérant avec ledit mécanisme d'actionnement et étant structuré de façon à déclencher l'ouverture desdits contacts séparables,
ladite diode électroluminescente bidirectionnelle, et ladite résistance en série avec ladite diode électroluminescente bidirectionnelle, la combinaison en série de ladite résistance et de ladite diode électroluminescente bidirectionnelle étant connectée électriquement en parallèle avec ledit solénoïde de déclenchement, et
dans lequel ledit circuit de déclenchement de défaut de mise à la terre est structuré de façon à coopérer avec ledit mécanisme d'actionnement et à déclencher l'ouverture desdits contacts séparables en réponse à la condition de déclenchement de défaut de mise à la terre et à ladite défaillance en circuit ouvert du solénoïde de déclenchement.

7. Disjoncteur à courant de défaut à sécurité intégrée (2) selon les revendications 1 ou 2, dans lequel ledit circuit de déclenchement de défaut de mise à la terre comprend :
(d) ledit premier redresseur commandé au silicium coopérant avec ledit mécanisme d'actionnement et étant structuré de façon à déclencher l'ouverture desdits contacts séparables, et
ledit second redresseur commandé au silicium coopérant avec ledit mécanisme d'actionnement et étant structuré de façon à déclencher l'ouverture desdits contacts séparables, ledit second redresseur commandé au silicium étant monté en parallèle avec ledit premier redresseur commandé au silicium, et
dans lequel ledit circuit de déclenchement de défaut de mise à la terre est structuré de façon à coopérer avec ledit mécanisme d'actionnement et à déclencher l'ouverture desdits contacts séparables en réponse à la condition de déclenchement de défaut de mise à la terre et à ladite défaillance en circuit ouvert dudit nombre dudit premier redresseur commandé au silicium et dudit second redresseur commandé au silicium.

8. Disjoncteur à courant de défaut à sécurité intégrée (2) selon la revendication 7, dans lequel ledit circuit de déclenchement de défaut de mise à la terre est structuré de façon à coopérer avec ledit mécanisme d'actionnement et à déclencher l'ouverture desdits contacts séparables en réponse à la condition de déclenchement de défaut de mise à la terre et à ladite défaillance en circuit ouvert dudit nombre dudit premier redresseur commandé au silicium et dudit second redresseur commandé au silicium.

9. Disjoncteur à courant de défaut à sécurité intégrée (2) selon les revendications 1 ou 2, dans lequel ledit circuit de défaut de mise à la terre analogique possède en outre une entrée de réaction de tension (56) ; et dans lequel ledit circuit de déclenchement de défaut de mise à la terre est structuré de façon à coopérer avec ledit mécanisme d'actionnement et à déclencher l'ouverture desdits contacts séparables en réponse à la condition de déclenchement de défaut de mise à la terre et à une défaillance en circuit ouvert de ladite entrée de réaction de tension.

10. Disjoncteur à courant de défaut à sécurité intégrée (2) selon les revendications 1 ou 2, dans lequel ledit circuit de défaut de mise à la terre analogique possède en outre une sortie d'amplificateur opérationnel (58) ; dans lequel ledit circuit de déclenchement de défaut de mise à la terre comprend un transformateur de courant (60) ayant un enroulement secondaire (62), un premier condensateur (64) connecté électriquement en parallèle avec l'enroulement secondaire, et un second condensateur (66) ; dans lequel le second condensateur est connecté électriquement entre ladite sortie d'amplificateur opérationnel et un point de connexion commun (68) entre ledit premier condensateur et ledit second condensateur ; et dans lequel ledit circuit de déclenchement de défaut de mise à la terre est structuré de façon à coopérer avec ledit mécanisme d'actionnement et à déclencher l'ouverture desdits contacts séparables en réponse à la condition de déclenchement de défaut de mise à la terre et à une défaillance en circuit ouvert de ladite sortie d'amplificateur opérationnel lorsqu'un courant de défaut de mise à la terre différentiel traversant ledit transformateur de courant est supérieur à environ 1 mA.
